(19)

**Europäisches Patentamt**

**European Patent Office**

**Office européen des brevets**

(11) **EP 4 586 094 A1**

(12) **EUROPEAN PATENT APPLICATION**

(43) Date of publication:
16.07.2025 Bulletin 2025/29

(21) Application number: 24191991.9

(22) Date of filing: 31.07.2024

(51) International Patent Classification (IPC):
*G06F 9/52* (2006.01)

(52) Cooperative Patent Classification (CPC):
**G06F 9/522; G06F 9/526;** G06F 2209/5021;
G06F 2209/548

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 11.01.2024 EP 24151325

(71) Applicant: Elektrobit Automotive GmbH
91058 Erlangen (DE)

(72) Inventors:
• **NAGARAJAN, Drona**
**8010 Graz (AT)**
• **SCHEIPEL, Tobias**
**8010 Graz (AT)**
• **BAUNACH, Marcel**
**8010 Graz (AT)**
• **KRISPER, Michael**
**4040 Linz (AT)**

(74) Representative: **Aumovio Corporation
Continental Automotive
Technologies GbH
Putzbrunner Straße 69
81739 München (DE)**

(54) **HANDLING OF REQUESTS IN A MULTI-CORE SYSTEM**

(57) The present invention is related to a method and a computer program code for handling requests in a multi-core system. In a first step, a request for a globally shared resource is received (S1) from a task belonging to a processing core. In case a FIFO queue associated with the globally shared resource is empty, the request is satisfied (S2). In case the FIFO queue associated with the globally shared resource is not empty, the request is queued (S4) in the FIFO queue. When the queued request reaches the head of the FIFO queue, the task is treated (S6) as eligible to enter the respective critical section. The invention is further directed towards a multi-core system using such a method.

FIG. 1

**EP 4 586 094 A1**

**Description**

The present invention is related to a method and a computer program code for handling requests in a multi-core system. The invention is further directed towards a multi-core system using such a method.

Spinlock is an inter-core mutual exclusion mechanism, where a task or a thread simply waits in a tight loop polling a lock variable until it is available. AUTOSAR, which is a global partnership of companies in the automotive and software industry, mandates the use of spinlocks for global resource sharing. A global resource is a resource that is shared by two or more tasks assigned to different processors or processing cores. For example, globally shared resources may be data structures or hardware interfaces. When a task requests a globally shared resource that is currently occupied by another task on another processing core, then the requesting task busy waits on the respective processing core. AUTOSAR specifications specify that the spinning tasks are preemptible. i.e., any higher-priority task released on the same processing core is allowed to preempt the spinning task. Such a spinlock is called a preemptible spinlock.

Of course, multiple tasks across processing cores can request a specific spinlock. AUTOSAR specifications do not mandate any specific order in which these requests are satisfied. A simple and often effective way to implement preemptible spinlocks is to satisfy the requests in no particular order. Such spinlocks are called unordered spinlocks. However, the lack of ordering guarantees makes it challenging to derive non-trivial bounds on the worst-case blocking a task suffers due to other remote tasks competing for the same resource.

To overcome the lack of ordering guarantees, several methods have been proposed that associate a queue (First-In-First-Out (FIFO) or priority) with a globally shared resource. These queues ensure that all the requests are satisfied in a particular order. The various approaches to spinlocks may be categorized in different categories. Spinlocks of an F|* category use a FIFO-based mechanism to manage access to globally shared resources. The "*" suggests that these spinlocks can be preemptible (F|P) or non-preemptible (F|N). Similarly, spinlocks of a P|* category use a priority queue-based mechanism. Unordered preemptible spinlocks fall under the U|P category.

Although associating a queue with a spinlock resource guarantees an order, it also introduces problems of starvation and deadlock.

It is an object of the present invention to provide an improved solution for handling requests in a multi-core system.

This object is achieved by a method according to claim 1, by a computer program code according to claim 13, which implements this method, and by a multi-core system according to claim 14. The dependent claims include advantageous further developments and improvements of the present principles as described below.

According to a first aspect, a method for handling requests in a multi-core system comprises the steps of:

- receiving, from a task belonging to a processing core, a request for a globally shared resource;
- in case a FIFO queue associated with the globally shared resource is empty, satisfying the request;
- in case the FIFO queue associated with the globally shared resource is not empty, queueing the request in the FIFO queue; and
- when the queued request reaches the head of the FIFO queue, treating the task as eligible to enter the respective critical section.

Accordingly, a computer program code comprises instructions, which, when executed by a multi-core system, cause the multi-core system to perform the following steps for handling requests:

- receiving, from a task belonging to a processing core, a request for a globally shared resource;
- in case a FIFO queue associated with the globally shared resource is empty, satisfying the request;
- in case the FIFO queue associated with the globally shared resource is not empty, queueing the request in the FIFO queue; and
- when the queued request reaches the head of the FIFO queue, treating the task as eligible to enter the respective critical section.

The computer program code can, for example, be made available for electronic retrieval or stored on a computer-readable storage medium.

According to another aspect, a multi-core system is configured to perform the following steps for handling requests:

- receiving, from a task belonging to a processing core, a request for a globally shared resource;
- in case a FIFO queue associated with the globally shared resource is empty, satisfying the request;
- in case the FIFO queue associated with the globally shared resource is not empty, queueing the request in the FIFO queue; and

- when the queued request reaches the head of the FIFO queue, treating the task as eligible to enter the respective critical section.

FIFO-ordering of requests can cause a deadlock due to requests for the same globally shared resource from tasks belonging to the same processing core. To tackle this problem and to maintain a strict FIFO ordering of the requests to a globally shared resource, the solution according to the invention allows a higher-priority task, whose request for the globally shared resource is already queued, to yield the processing core to a lower-priority task on the same processing core, which is eligible to enter its critical section protected by the globally shared resource. This approach takes advantage of the fact that the higher-priority task is not doing any worthwhile execution. Therefore, allowing the higher-priority task to yield the processing core to a lower-priority task that is already eligible to enter the respective critical section allows the lower-priority task to progress. A task is treated as eligible to enter the respective critical section when the queued request reaches the head of the FIFO queue, i.e., when the queued request is the next element to be polled from the queue.

In an advantageous embodiment, when the request is satisfied, a priority of the task is raised to a ceiling priority of the processing core to which the task belongs. For multi-core resource sharing, is needs to be ensured that global critical sections are atomic, i.e., if a task is executing a global critical section, preemptions from local higher-priority tasks must not be allowed. This is achieved by raising the priority of the task which acquires a global resource to a ceiling priority of the processing core to which the task belongs.

In an advantageous embodiment, when the request is queued in the FIFO queue, the task starts spinning on the respective processing core at the priority it had when the request was issued. This allows other tasks on the same processing core that have a higher priority to preempt the spinning task and, therefore, to maintain a strict priority-ordered scheduling. The request of a preempted task is not deleted from the FIFO queue.

In an advantageous embodiment, when the task is eligible to enter the respective critical section and resumes execution, the task acquires the globally shared resource. Since the corresponding task may be spinning preemptively, it is possible that the task is not actively polling its position in the FIFO queue at the time when the respective request reached the head of the FIFO queue. Therefore, when the task eventually resumes execution, it immediately acquires the globally shared resource.

In an advantageous embodiment, when the task acquires the globally shared resource, the priority of the task is raised to a ceiling priority of the processing core to which the task belongs, and the task enters the respective critical section. As already stated before, this prevents potential preemptions from local higher-priority tasks when a task is executing a global critical section.

In an advantageous embodiment, when the task completes the respective critical section, the task releases the globally shared resource, the priority of the task is lowered to the respective previous value, and the request is deleted from the FIFO queue. This ensures that the next request in the queue becomes eligible to enter the respective critical section.

In an advantageous embodiment, each globally shared resource has an own associated FIFO queue. This ensures that for each globally shared resource all requests are satisfied in a particular order.

In an advantageous embodiment, locally shared resources are managed using a highest locker protocol. In this case, the priority of a task, which has acquired a locally shared resource, is raised to a ceiling priority of the resource. In this way, preemptions can be caused by only those tasks whose base priority is greater than the ceiling priority of the resource that is currently occupied.

In an advantageous embodiment, the multi-core system is a multi-core real-time operating system, e.g., an AUTOSAR-compliant system. As AUTOSAR mandates the use of spinlocks for global resource sharing, use of the solution according to the invention is particularly useful for an AUTOSAR-compliant system.

Further features of the present invention will become apparent from the following description and the appended claims in conjunction with the figures.

Figures

Fig. 1    schematically illustrates a method for handling requests in a multi-core system;

Fig. 2    schematically illustrates a multi-core system, in which a solution according to the invention is implemented;

Fig. 3    schematically illustrates a state of a FIFO queue at different times; and

Fig. 4    schematically illustrates execution states of higher priority tasks.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, by a plurality of individual processors, some of which may be shared, by a graphic processing Unit (GPU), or by banks of GPUs. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random-access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

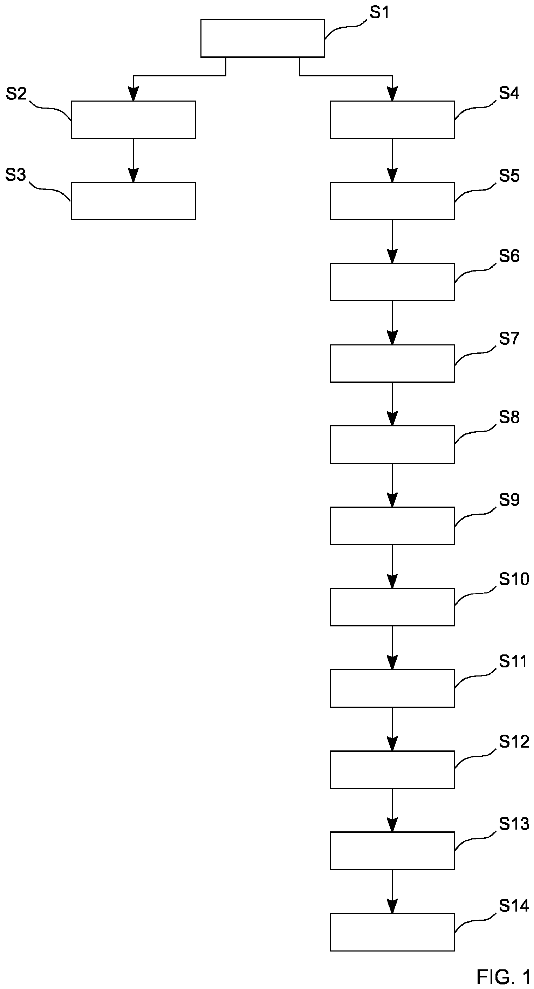

Fig. 1 schematically illustrates a method according to the invention for handling requests in a multi-core system. For example, the multi-core system may be a multi-core real-time operating system, e.g., an AUTOSAR-compliant system. In a first step, a request for a globally shared resource is received S1 from a task belonging to a processing core. In case a FIFO queue associated with the globally shared resource is empty, the request is satisfied S2. In this case, a priority of the task is preferably raised S3 to a ceiling priority of the processing core to which the task belongs. Advantageously, each globally shared resource has an own associated FIFO queue. In case the FIFO queue associated with the globally shared resource is not empty, the request is queued S4 in the FIFO queue. The task may then start S5 spinning on the respective processing core at the priority it had when the request was issued. When the queued request reaches the head of the FIFO queue, the task is treated S6 as eligible to enter the respective critical section. When the task is eligible to enter the respective critical section and resumes S7 execution, the task acquires S8 the globally shared resource. The priority of the task is then raised S9 to a ceiling priority of the processing core to which the task belongs, and the task enters S10 the respective critical section. When the task completes S11 the respective critical section, the task releases S12 the globally shared resource, the priority of the task is lowered S13 to the respective previous value, and the request is deleted S14 from the FIFO queue. Locally shared resources are preferably managed using a highest locker protocol. In this case, the priority of a task, which has acquired a locally shared resource, is raised to a ceiling priority of the resource.

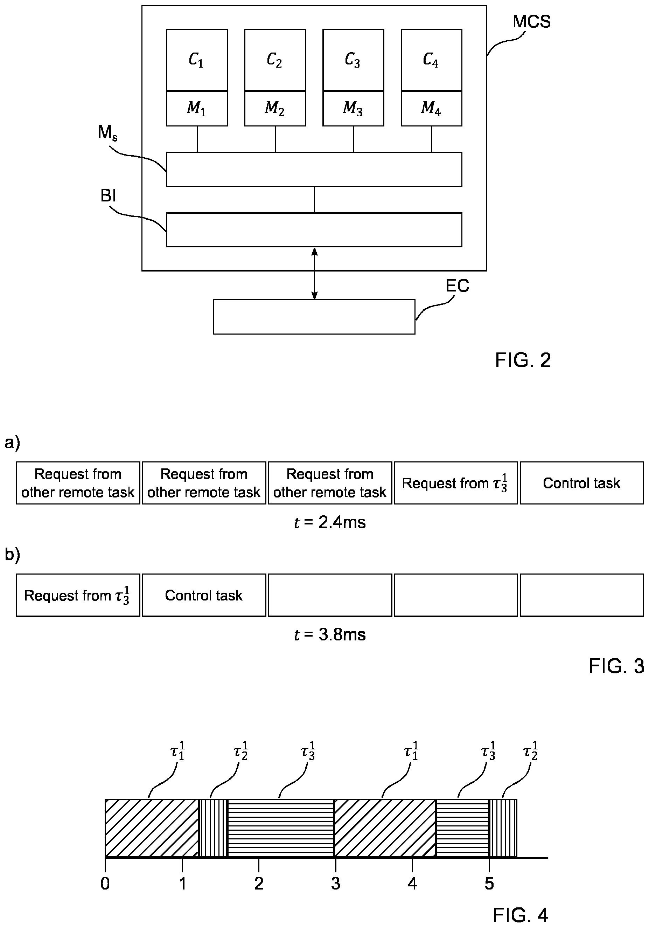

Fig. 2 schematically illustrates a multi-core system MCS, in which a solution according to the invention is implemented. For example, the multi-core system MCS may be a multi-core real-time operating system, e.g., an AUTOSAR-compliant system. The multi-core system MCS has four processing cores $C_1,...,C_4$. In this example, each processing core $C_1,...,C_4$ has an associated individual memory $M_1,...,M_4$. In addition, a shared memory $M_s$ is provided for all processing cores $C_1,...,C_4$. Communication with external components EC outside of the multi-core system MCS is performed using a bus interface BI. One challenge for multi-core systems is resource sharing and inter-core communication. In multi-core systems, processing cores may need to share memory and other resources, which requires an effective management to prevent conflicts and to ensure data integrity. To this end, the multi-core system MCS of Fig. 2 implements the method of Fig. 1 for handling requests.

In the following, further details of an exemplary implementation of a solution according to the invention shall be given.

First, a system model shall be defined. A P-FP preemptive system is assumed. A set of processing cores on a multicore processor is defined as $C = \{C_1, C_2, C_3, ..., C_n\}$. A task set $T = \left\{\tau_1^x, \tau_2^x, \ldots, \tau_1^y, \tau_2^y, \ldots, \tau_1^z, \tau_2^z, \ldots\right\}$ is defined such that each task $\tau_i^k \in C_k$, where $C_k$ is the k-th processing core of a multi-core processor. Each task is characterized by the period $p_{\tau_i^k}$ of the task, the execution time $e_{\tau_i^k}$, the release time $r_{\tau_i^k}$, and a priority $P_{\tau_i^k}$. The tasks are arranged in descending order of their priorities $P_{\tau_i^k} > P_{\tau_{i+1}^k}$. It is worth noting that priorities across processing cores are not comparable in the present approach. Therefore, a task that has a high priority on the respective processing core does not dominate a lower-priority task on a different processing core.

AUTOSAR differentiates between locally shared and globally shared resources. Locally shared resources are managed using the Highest Locker Protocol (HLP).

Globally shared resources are managed using spinlocks. The following resource model is specified for the present protocol.

A set of spin lock-protected global resources is defined as $R_G = \left\{R_G^1, \ldots, R_G^p\right\}$. Each global resource $R_G^x$ has an associated FIFO queue. Usually, for real-time systems, the number of tasks that will request access to a particular local or global resource is defined. Based on this assumption, the length of the FIFO queue associated with every $R_G^x$ can defined as $\lambda_{R_G^x}$.

The nesting of global critical sections shall be allowed. The AUTOSAR specifications are leveraged in that they state that the nesting order must be statically defined and must ensure freedom from deadlocks that may occur due to the wrong nesting order. This is the responsibility of the system designer, and it can safely be assumed that such a nesting order exists. However, the following is limited to non-nested spinlocks.

For multi-core resource sharing, it has to be ensured that global critical sections are atomic, i.e., if a task is executing a global critical section, preemptions from local higher-priority tasks must not be allowed. This can be achieved by raising the priority of the task which acquires a global resource. To guarantee that a global critical section is atomic, the priority of the corresponding task is raised to the ceiling priority of the processing core. The ceiling priority $\overline{P}_{C_k}$ of a processing core is equal to the priority of the highest-priority task on that processing core.

In addition to global resources, also a set of local resources is defined as $RL = \left\{R_L^1, \ldots, R_L^q\right\}$. Under HLP, the priority of the task, which has acquired a resource, is raised to the ceiling priority $\overline{P}_{R_L^x}$ of the resource. Preemptions can then be caused by only those tasks whose base priority is greater than the ceiling priority of the resource that is currently occupied.

The rules of the protocol are now specified as follows:

1. Whenever a task does request $R_G^x$, the request is queued in the associated FIFO queue if the request cannot be satisfied immediately, i.e., the FIFO queue is not empty. The corresponding task then starts spinning on the respective processing core at whatever priority it had when the request was issued. This allows other tasks on the same processing core with a higher priority to preempt the spinning task and therefore maintain the strict priority-ordered scheduling mandated by AUTOSAR. The request of a preempted task is not deleted from the FIFO queue.

2. If the FIFO queue associated with $R_G^x$ is empty, i.e., there are no requests from any task, then a new request is immediately satisfied. The priority of the task is immediately raised to the ceiling priority $\overline{P}_{C_k}$ of the processing core to which the task belongs.

3. When a request which was queued reaches the head of the FIFO queue, the corresponding task is eligible to enter the respective critical section. Since the corresponding task is spinning preemptively, it is possible that the task is not actively polling its position in the FIFO queue at the time when the respective request reaches the head of the FIFO queue. When the task eventually resumes execution, it immediately acquires $R_G^x$, raises the priority, and enters the respective critical section.

4. When the task completes the respective global critical section and releases $R_G^x$, the request is deleted from the FIFO queue, and the priority of the task is lowered to whatever priority it had before acquiring $R_G^x$. The next request in the queue is then eligible to enter the respective critical section.

As stated before, FIFO-ordering of requests can cause a deadlock due to requests for the same global resource from tasks belonging to the same processing core. To tackle this problem and to maintain a strict FIFO ordering of the requests to $R_G^x$, the higher-priority task, whose request for $R_G^x$ is already queued, is allowed to yield the processing core to the lower-priority task on the same processing core, which is eligible to enter the respective critical section protected by $R_G^x$. The priority of the lower-priority task is raised immediately to the ceiling priority of the respective processing core, and it enters the respective critical section.

This approach takes advantage of the fact that the higher-priority task is not doing any worthwhile execution. Therefore, allowing the higher-priority task to yield the processing core to a lower-priority task that is already eligible to enter the respective critical section allows the lower-priority task to progress.

To explain the acquisition latency, consider a set of three tasks on a first processing core $C_1$. The tasks are characterized as follows $\{T = (p_{\tau_i^1}, e_{\tau_i^1}):$ $\tau_1^1 = (3\text{ms}, 1.4\text{ms}), \tau_2^1 = (5\text{ms}, 0.17\text{ms}), \tau_3^1 = (7\text{ms}, 2.09\text{ms})\}$. It is assumed that the priorities of the tasks are defined based on a rate-monotonic priority assignment. It is further assumed that all the tasks are ready or released at $t$ = 0ms.

Now, $\tau_3^1$ requests a global resource $R_G^x$ at time $t$ = 2.4ms. It is assumed that $R_G^x$ was not available at this time. Therefore, the request from $\tau_3^1$ is queued in the associated FIFO queue of $R_G^x$. Since $\tau_3^1$ spins preemptively, $\tau_1^1$ and $\tau_2^1$ can preempt $\tau_3^1$.

Eventually, the request from $\tau_3^1$ progresses to the head of the FIFO queue. Assume, for example, that the request from $\tau_3^1$ reaches the head of the FIFO queue at time $t$ = 3.8ms. Fig. 3a) and 3b) illustrate the state of the FIFO queue at different times.

The Gantt chart in Fig. 4 shows the state of execution of the higher priority tasks in the processing core $C_1$. The diagonally hashed boxes correspond to task $\tau_1^1$. The vertically hashed boxes correspond to $\tau_2^1$. Clearly, at t = 3.8ms, $\tau_3^1$ is preempted by $\tau_1^1$. Although $\tau_3^1$, represented by the horizontally hashed boxes, is eligible to enter the respective critical section, it acquires the resource after $\tau_1^1$ completes execution and $\tau_3^1$ resumes execution. When $\tau_3^1$ resumes execution, it immediately acquires $R_G^x$ the priority of $\tau_3^1$ is raised to the ceiling priority of the processing core, and $\tau_3^1$ begins executing the respective critical section. The difference between the time when a task becomes eligible to enter the respective critical section and when the task actually acquires the lock and enters the respective critical section is called acquisition latency.

In Fig. 3a) and 3b), this acquisition latency is propagated down the queue. From the perspective of the control task $T_c$, the question is:

1. How long do the higher priority tasks block a lower-priority task that is eligible to enter the respective critical section, i.e., what is the acquisition latency?

2. How much blocking does the control task $T_c$ incur due to all the requests that precede the respective request in the FIFO queue?

The time at which a spinning task becomes eligible is usually measured in absolute terms, i.e., from $t$ = 0. Therefore, it needs to be calculated, in absolute terms, whether or not any local higher-priority tasks are already executing when a spinning task becomes eligible. If there are, then it also needs to be calculated, in absolute terms, how much time these higher-priority tasks demand for completion. Assuming that the higher-priority tasks may also have to spin, waiting for a spinlock resource, the execution time of these higher-priority tasks may also be bloated.

In the following, an algorithm is described that takes into account the elapsed time of the higher-priority tasks.

First an algorithm is used that returns the last idle instance $L_n(t)$, with $n = y - 1$, where $y$ represents the task $\tau_y^x$, with respect to some time $t$. Assuming that a task $\tau_y^x$ becomes eligible at time $t_{EL}$, if $L_n(t_{EL}) = t_{EL}$, then $\tau_y^x$ suffers 0 acquisition latency. Otherwise, the acquisition latency is calculated. First, the release times of the higher-priority tasks with respect to the last idle instance $t = L_n(t_{EL})$ are calculated as:

$$r_j(t) = \left\lceil \frac{t - r_{\tau_j^x}}{p_{\tau_j^x}} \right\rceil \cdot p_{\tau_j^x} + r_{\tau_j^x}, \forall j = 1, \ldots, n. \tag{1}$$

The next computing instance is calculated as:

$$\rho_n(t) = \min_{j=1,\ldots,n} \left( \left\lceil \frac{t - r_{\tau_j^x}}{p_{\tau_j^x}} \right\rceil \cdot p_{\tau_j^x} + r_{\tau_j^x} \right). \tag{2}$$

The following algorithm calculates the total time elapsed after completion of the higher-priority tasks. The value $w(t)$ is the total relative time demanded for completion by the higher-priority tasks released at the last idle instance. Therefore, the sum $L_n(t_{EL}) + w(t)$ is the total time elapsed since $t = 0$. The if-condition checks if the total time elapsed is less than the next computing instance relative to $t_{EL}$. If true, then the acquisition latency is the difference between the total time elapsed and $t_{EL}$. Else, the next computing instance relative to $L_n(t_{EL}) + w(t)$ is calculated and the algorithm is reiterated.

**procedure** $AcqLat(\tau_y^x)(L_n(t_{EL}), t_{EL})$

    $ITER \leftarrow 0$

    $t \leftarrow \rho_j(t_{EL})$

    **while** True **do**

        $w(t) = \sum_{j=1}^{y-1} \left\lceil \frac{t - r_j(L_n(t_{EL}))}{p_{\tau_j^x}} \right\rceil \cdot e'_{\tau_j^x}$

        **if** $L_n(t_{EL}) + w(t) < t$ **then**

            **return** $\left( (L_n(t_{EL}) + w(t)) - t_{EL} \right)$

        **else**

            $ITER \leftarrow L_n(t_{EL}) + w(t)$

            $t \leftarrow \rho_j(ITER)$

        **end if**

    **end while**

**end procedure**

Applying the algorithm to the above example, where $t_{EL}$ = 3.8ms for task $\tau_3^1$, one gets $L_2(3.8)$ = 3ms, which indeed is the last idle instance as can be seen in Fig. 4. Also, the release times of tasks $\tau_1^1$ and $\tau_2^1$ can be calculated as:

$$r_1(3) = \left\lceil \frac{3-0}{3} \right\rceil \cdot 3 + 0 = 3$$

$$r_2(3) = \left\lceil \frac{3-0}{5} \right\rceil \cdot 5 + 0 = 5 \,.$$

The next computing instance with respect to $t_{EL}$ is:

$$\rho_2(3.8) = \min_{j=1,2} \left( \left\lceil \frac{3.8-0}{3} \right\rceil \cdot 3 + 0, \left\lceil \frac{3.8-0}{5} \right\rceil \cdot 5 + 0 \right) = 5 \,.$$

Calculating w(5), one gets w(5) = 1.4ms. Finally, the if-condition evaluates to be true (3+1.4 = 4.4ms < 5ms) and one gets an acquisition latency of 0.6ms.

Let the length of the global critical section of task $\tau_3^1$ associated with $R_G^x$ be $\sigma(\tau_3^1, R_G^x)$. Going back to Fig. 3b), the task $\tau_3^1$ contributes a total blocking of $0.60\text{ms} + \sigma(\tau_3^1, R_G^x)\text{ms}$ towards the control task $T_c$. Task $T_c$ is necessarily a task on a remote processing core $C_k \neq C_1$.

Generalizing this result, a request for $R_G^x$ from a task $\tau_i^k$ towards the tail of the associated FIFO queue incurs a worst-case blocking time of $B_{\tau_i^k}(R_G^x)$:

$$B_{\tau_i^k}(R_G^x) = \max \left( \sum_{\forall \tau_y^x \to R_G^x \backslash \{\tau_i^k\}} \left( AcqLat(\tau_y^x) + \sigma(\tau_y^x, R_G^x) \right) \right), \qquad (3)$$

where $\to$ signifies that the task $\tau_y^x$ accesses the global resource $R_G^x$. Since spinlock is a busy wait mechanism, the blocking caused by remote tasks is accounted for in the execution time of the task $\tau_i^k$. Therefore, the execution time of $\tau_i^k$ is bloated. However, since the task $\tau_i^k$ is allowed to spin preemptively on the respective processing core, the execution time of the task is not bloated for the entire duration of $B_{\tau_i^k}(R_G^x)$. Assuming that $\tau_i^k$ issues a request for $R_G^x$ at time $req(R_G^x, \tau_i^k)$, the preemptions caused by those higher-priority tasks that will be released in the interval $\Omega = \left[ req(R_G^x, \tau_i^k), req(R_G^x, \tau_i^k) + B_{\tau_i^k}(R_G^x) \right]$ must be subtracted. The set $S$ of higher-priority tasks that are released on processing core $C_k$ in this interval can be calculated using Equation (1) with $t = req(R_G^x, \tau_i^k)$:

$$S = \left\{ \tau_j^k : r_j \left( req(R_G^x, \tau_i^k) \right) \in \Omega \right\}. \qquad (4)$$

The preemptions caused by the higher priority tasks can then be given by:

$$I_{\tau_i^k}(R_G^x) = \sum_{\forall \tau_j^k \in S} \left\lceil \frac{r_{\tau_j^k} - req(R_G^x, \tau_i^k)}{p_{\tau_j^k}} \right\rceil \cdot e'_{\tau_j^k} \,.$$

Therefore, the execution time of task $\tau_i^k$ is bloated, with respect to resource $R_G^x$, by:

$$e'_{\tau_i^k}(R_G^x) = e_{\tau_i^k} + \left(B_{\tau_i^k}(R_G^x) - I_{\tau_i^k}(R_G^x)\right)_0, \tag{5}$$

where $(...)_0$ specifies that the minimum value of the expression inside the parenthesis is 0.

Finally, task $\tau_i^k$ may have more than one (non-nested) critical section. Therefore, the total worst case execution time bloating incurred by $\tau_i^k$ is:

$$e'_{\tau_i^k} = e_{\tau_i^k} + \sum_{\forall\, R_G^l : \tau_i^k \to R_G^l} \left(B_{\tau_i^k}(R_G^l) - I_{\tau_i^k}(R_G^l)\right)_0. \tag{6}$$

It needs to be considered that the set $S$ may change for every spinlocked resource accessed by the task $\tau_i^k$. Furthermore, the algorithm considers the bloated execution time of all higher-priority tasks on processing core $C_x$. Therefore, the algorithm needs to be applied to every task on processing core $C_x$ to obtain the bloated execution time of each $y$ - 1 tasks on processing core $C_x$.

Since F|P spinlocks dominate U|P spinlocks, the execution time bloating under the present Multi-core-HLP will always dominate the execution time bloating under U|P spinlock. Moreover, the analysis in Equation (6) is not pessimistic, because the preemptions caused by higher-priority tasks on the processing core $C_x$ are subtracted to account for the time when $\tau_i^k$ is preempted on the respective processing core while waiting in the FIFO queue associated with a spinlocked resource.

In the above analysis, an upper bound for the blocking contributed by remote tasks was derived. Since spinlock is a busy-wait mechanism, the blocking time due to remote tasks is reflected in the execution time of the blocked task. In the following, upper bounds on the blocking a task suffers due to the behavior of other tasks on the same processing core are derived, which can be referred to as local blocking.

Several factors affect the local blocking a task suffers due to the tasks on the same processing core. For instance, consider a low-priority task $\tau_{lp}^k$, which has acquired a local resource $R_L^x$. Now, according to the rules of HLP, the priority of the task $\tau_{lp}^k$ is raised to $\overline{P}_{R_L^x}$. If a higher-priority task $\tau_{hp}^k$ is released while the task $\tau_{lp}^k$ is still holding $R_L^x$, $\tau_{hp}^k$ will be blocked due to a priority inversion if $\overline{P}_{R_L^x} > P_{\tau_{hp}^k}$. In the worst case, $\tau_{hp}^k$ will be blocked for the entire length of the critical section of $\tau_{lp}^k$ protected by $R_L^x(\sigma(\tau_{lp}^k, R_L^x))$. A similar scenario can be constructed if $\tau_{lp}^k$ acquires a global resource $R_G^x$.

The following lemmas are presented to derive an upper bound on local blocking a task incurs.

**Lemma 1** A task $\tau_i^k$ incurs priority inversion from at most one lower-priority task which has acquired a local resource such that $\overline{P}_{R_L^x} > P_{\tau_i^k}$.

Proof: A lower-priority task $\tau_{lp}^k$ can acquire a local resource $R_L^x$ only when it is executing. Therefore, if the task $\tau_i^k$ is released, such that $\overline{P}_{R_L^x} > P_{\tau_i^k}$, $\tau_i^k$ is blocked from executing until $\tau_{lp}^k$ releases $R_L^x$ and lowers the respective priority. The task $\tau_i^k$ immediately preempts $\tau_{lp}^k$, and any other lower-priority task that may have been released in the meantime, when $\tau_{lp}^k$ releases $R_L^x$. Hence, $\tau_i^k$ incurs priority inversion from at most one lower-priority task.

**Lemma 2** A task $\tau_i^k$ incurs priority inversion from at most one lower-priority task that has acquired a global resource $R_G^q$ which is not accessed by $\tau_i^k$.

Proof: The proof follows a similar argument as Lemma 1. A lower priority task $\tau_{lp}^k$ can only acquire $R_G^q$ if it is currently executing. As per the rules of the present protocol, the priority of the lower-priority task is raised to the ceiling priority of the processing core. Therefore, any higher-priority task which is released while $\tau_{lp}^k$ is executing the respective critical section cannot start execution until $\tau_{lp}^k$ releases $R_G^q$. As soon as $\tau_{lp}^k$ releases $R_G^q$, $\tau_i^k$ preempts $\tau_{lp}^k$ and other lower-priority tasks that may have been released in the meantime. Therefore, $\tau_i^k$ is blocked by exactly one lower-priority task that acquires a global resource $R_G^q$ which is not accessed by $\tau_i^k$.

Local blocking caused according to Lemma 1 and Lemma 2 can be upper bounded as follows:

$$B_{res} = \max \left( \max_{\substack{\tau_{lp}^k \to R_L^x \\ P_{\tau_{lp}^k} < P_{\tau_i^k} \\ \wedge \bar{P}_{R_L^x} > P_{\tau_i^k}}} \sigma\left(\tau_{lp}^k, R_L^x\right), \max_{\substack{\tau_{lp}^k \to R_G^q \\ P_{\tau_{lp}^k} < P_{\tau_i^k}}} \sigma\left(\tau_{lp}^k, R_G^q\right) \right). \qquad (7)$$

According to Lemma 1 and Lemma 2, it is apparent that a higher-priority task incurs a priority inversion from exactly one lower-priority task. Also, at any given time, the priority inversion can be due to a local or a global resource, but not both. The worst-case blocking is equal to the maximum of the longest local and global critical sections.

**Lemma 3** The task $\tau_i^k$ incurs blocking from all those lower-priority tasks that access the same global resources as $\tau_i^k$. The blocking $\tau_i^k$ suffers is equal to the cumulative length of the critical sections of the lower-priority tasks, protected by the same global resources as $\tau_i^k$.

Proof: This lemma stems from the fact that a higher-priority task which is spinning for $R_G^x$ yields the processing core to a lower-priority task from the same processing core whose request for $R_G^x$ has progressed to the head of the queue. If there are $l$ such lower-priority tasks, then, in the worst case, $\tau_i^k$ has to yield for all of them. Each such lower-priority task blocks $\tau_i^k$ exactly for the length of their critical section protected by $R_G^x$.

Blocking caused by Lemma 3 can be upper bounded as follows:

$$B_{FIFO} = \sum_{\substack{\forall \tau_{lp}^k \to R_G^x \\ P_{\tau_{lp}^k} < P_{\tau_i^k}}} \sigma\left(\tau_{lp}^k, R_G^x\right) \mid \forall R_G^x : \tau_i^k \to R_G^x. \qquad (8)$$

The total local blocking is therefore given by:

$$\beta_L = B_{res} + B_{FIFO}. \qquad (9)$$

The worst-case response time of task $\tau_i^k$ is:

$$e'_{\tau_i^k} + \beta_L + \sum_{j=1}^{i-1} \left\lceil \frac{R_{\tau_i^k} + r_{\tau_i^k}}{p_{\tau_j^k}} \right\rceil \cdot e'_{\tau_j^k} = R_{\tau_i^k}, \qquad (10)$$

where $R_{\tau_i^k}$ represents the worst-case response time of the task $\tau_i^k$. Equation (10) is recursive and can be solved using fixed point iteration.

**Reference numerals**

BI      Bus interface
$C_i$      Core
EC      External components
MCS      Multi-core system
$M_i$      Memory
$M_s$      Shared memory

$t_i^k$      Task

S1      Receive request for globally shared resource
S2      Satisfy request if FIFO queue of globally shared resource is empty
S3      Raise priority to ceiling priority of processing core
S4      Queue request if FIFO queue of globally shared resource is not empty
S5      Start spinning of task on processing core
S6      Treat task as eligible to enter critical section
S7      Resume execution
S8      Acquire globally shared resource
S9      Raise priority to ceiling priority of processing core
S10      Enter critical section
S11      Complete critical section
S12      Release globally shared resource
S13      Lower priority to previous value
S14      Delete request from FIFO queue

**Claims**

1.  A method for handling requests in a multi-core system (MCS), the method comprising:

    - receiving (S1), from a task ( $t_i^k$ ) belonging to a processing core ($C_i$), a request for a globally shared resource;
    - in case a FIFO queue associated with the globally shared resource is empty, satisfying (S2) the request;
    - in case the FIFO queue associated with the globally shared resource is not empty, queueing (S4) the request in the FIFO queue; and

    - when the queued request reaches the head of the FIFO queue, treating (S6) the task ( $t_i^k$ ) as eligible to enter the respective critical section.

2.  The method according to claim 1, wherein when the request is satisfied (S2), a priority of the task (tk) is raised (S3) to a ceiling priority of the processing core ($C_i$) to which the task ( $t_i^k$ ) belongs.

3.  The method according to claim 1 or 2, wherein when the request is queued (S3) in the FIFO queue, the task ( $t_i^k$ ) starts spinning (S5) on the respective processing core ($C_i$) at the priority it had when the request was issued.

4.  The method according to claim 3, wherein when the task ( $t_i^k$ ) is eligible to enter the respective critical section and resumes (S7) execution, the task ( $t_i^k$ ) acquires (S8) the globally shared resource.

5. The method according to claim 4, wherein when the task ($t_i^k$) acquires (S8) the globally shared resource, the priority of the task ($t_i^k$) is raised (S9) to a ceiling priority of the processing core ($C_i$) to which the task ($t_i^k$) belongs, and the task ($t_i^k$) enters (S10) the respective critical section.

6. The method according to claim 5, wherein when the task ($t_i^k$) completes (S11) the respective critical section, the task ($t_i^k$) releases (S12) the globally shared resource, the priority of the task ($t_i^k$) is lowered (S13) to the respective previous value, and the request is deleted (S14) from the FIFO queue.

7. The method according to one of the preceding claims, wherein each globally shared resource has an own associated FIFO queue.

8. The method according to one of the preceding claims, wherein locally shared resources are managed using a highest locker protocol.

9. The method according to claim 8, wherein the priority of a task ($t_i^k$), which has acquired a locally shared resource, is raised to a ceiling priority of the resource.

10. The method according to one of the preceding claims, wherein the multi-core system (MCS) is a multi-core real-time operating system.

11. The method according to claim 10, wherein the multi-core real-time operating system is a system for automotive applications.

12. The method according to claim 11, wherein the multi-core real-time operating system is an AUTOSAR-compliant system.

13. A computer program code comprising instructions, which, when executed by a multi-core system (MCS), cause the multi-core system (MCS) to perform a method according to any of claims 1 to 12 for handling requests.

14. A multi-core system (MCS), wherein the multi-core system (MCS) is configured to perform a method according to any of claims 1 to 12 for handling requests.

FIG. 1

FIG. 2

a)

| Request from other remote task | Request from other remote task | Request from other remote task | Request from $\tau_3^1$ | Control task |
|---|---|---|---|---|

$t = 2.4\text{ms}$

b)

| Request from $\tau_3^1$ | Control task | | | |
|---|---|---|---|---|

$t = 3.8\text{ms}$

FIG. 3

FIG. 4

Europäisches
Patentamt

European
Patent Office

Office européen
des brevets

# EUROPEAN SEARCH REPORT

Application Number

EP 24 19 1991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AFSHAR SARA ET AL: "An optimal spin-lock priority assignment algorithm for real-time multi-core systems", 2017 IEEE 23RD INTERNATIONAL CONFERENCE ON EMBEDDED AND REAL-TIME COMPUTING SYSTEMS AND APPLICATIONS (RTCSA), IEEE, 16 August 2017 (2017-08-16), pages 1-11, XP033154576, DOI: 10.1109/RTCSA.2017.8046310 [retrieved on 2017-09-19] * the whole document * | 1-14 | INV. G06F9/52 |
| X | ALFRANSEDER MARTIN ET AL: "An efficient spin-lock based multi-core resource sharing protocol", 2014 IEEE 33RD INTERNATIONAL PERFORMANCE COMPUTING AND COMMUNICATIONS CONFERENCE (IPCCC), IEEE, 5 December 2014 (2014-12-05), pages 1-7, XP032725871, DOI: 10.1109/PCCC.2014.7017090 [retrieved on 2015-01-20] * the whole document * | 1-14 | |
| X | BURNS A ET AL: "A Schedulability Compatible Multiprocessor Resource Sharing Protocol -- MrsP", 2013 25TH EUROMICRO CONFERENCE ON REAL-TIME SYSTEMS, IEEE, 9 July 2013 (2013-07-09), pages 282-291, XP032485439, DOI: 10.1109/ECRTS.2013.37 [retrieved on 2013-09-17] * the whole document * | 1-14 | TECHNICAL FIELDS SEARCHED (IPC) G06F |
| X | US 2002/083063 A1 (EGOLF DAVID A [US]) 27 June 2002 (2002-06-27) * paragraphs [0001] - [0027] * | 1-14 | |

The present search report has been drawn up for all claims

| Place of search | Date of completion of the search | Examiner |
|---|---|---|
| The Hague | 14 January 2025 | Alecu, Mihail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 1991

This annex lists the patent family members relating to the patent documents cited in  the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | | Publication date |
|---|---|---|---|---|
| US 2002083063 A1 | 27-06-2002 | EP | 1346278 A2 | 24-09-2003 |
| | | US | 2002083063 A1 | 27-06-2002 |
| | | WO | 02052370 A2 | 04-07-2002 |

EPO FORM P0459

For more details about this annex : see Official Journal of the European Patent Office, No. 12/82